# FASCICULE DE BREVET EUROPEEN

(11) **EP 4 338 568 B1**
(45) Date de publication et mention de la délivrance du brevet: **15.01.2025**
(21) Numéro de dépôt: 23195221.9
(22) Date de dépôt: 04.09.2023
(51) Int. Cl.: A01D 34/62, A01D 34/63, A01D 34/64, A01D 34/66, A01D 34/73, A01D 34/81, A01D 34/835

(54) **MODULE DE COUPE DE VÉGÉTAUX COUPLABLE À UN CHÂSSIS DE MACHINE DE TRAVAIL DU SOL ET UNE MACHINE DE TRAVAIL DU SOL COMPRENANT AU MOINS UN MODULE DE COUPE**
AN EINEM BODENBEARBEITUNGSMASCHINENRAHMEN ANSCHLIESSBARES PFLANZENSCHNEIDMODUL UND BODENBEARBEITUNGSMASCHINE MIT MINDESTENS EINEM SCHNEIDMODUL
PLANT CUTTING MODULE COUPLABLE TO A FRAME OF A SOIL WORKING MACHINE AND A SOIL WORKING MACHINE COMPRISING AT LEAST ONE CUTTING MODULE

(30) Priorité: 14.09.2022 FR 2209245
(43) Date de publication de la demande: 20.03.2024
(73) Titulaire: Ferotin, Benoît, 26780 Chateauneuf du Rhône (FR)
(72) Inventeur: Ferotin, Benoît, 26780 Chateauneuf du Rhône (FR)
(74) Mandataire: Ipsilon

(56) Documents cités:
- CN-U- 216 163 455
- GB-A- 1 257 702
- JP-A- 2007 185 128
- JP-B2- H0 761 215
- KR-B1- 101 242 052

## Description

La présente invention concerne un module de coupe de végétaux couplable à un châssis de machine de travail du sol et une machine de travail du sol comprenant au moins un module de coupe.

Elle concerne en particulier un module de coupe de végétaux dits inter-rang couplable à un châssis de machine de travail du sol, ledit module de coupe comprenant un caisson positionnable en appui au sol, au moins un disque de coupe rotatif à axe de rotation dit vertical logé à l'intérieur du caisson et un dispositif d'entraînement en rotation du au moins un disque équipant ledit caisson, ledit caisson présentant en configuration d'utilisation d'appui au sol, une face avant ouverte, une face arrière opposée, des faces latérales, une face du dessous en regard du sol à travailler et une face du dessus opposée, et l'axe de rotation dit vertical du au moins un disque passant par les faces du dessous et du dessus du caisson.

Un tel module de coupe est connu comme l'illustre le document GB-1.257.702.

De nombreuses cultures sont organisées en rang comme cela est le cas par exemple des cultures en tunnel. Entre les rangs de culture, une végétation dite inter-rang est présente. Cette végétation inter-rang peut être formée d'herbe destinée à former un engrais ou d'une végétation indésirable. Dans tous les cas, il est nécessaire d'éliminer cette végétation qui tend à se développer. Jusqu'à présent pour éliminer une telle végétation inter-rang, il est utilisé un gyrobroyeur qui forme un dispositif de coupe du type de celui décrit ci-dessus. Dans le cas d'un gyrobroyeur, le caisson loge un seul disque. Les portions de végétaux issues de la coupe à l'aide d'un gyrobroyeur sont de grande longueur de sorte qu'il est nécessaire de les ramasser après la coupe. En outre, un tel gyrobroyeur nécessite pour son fonctionnement une puissance importante obligeant à requérir à l'utilisation de la prise de force du véhicule tractant le gyrobroyeur ou nécessitant une centrale hydraulique lorsque le gyrobroyeur est tracté.

Un but de l'invention est de proposer un module de coupe du type précité dont la conception permet une fragmentation des végétaux sans que le module de coupe ne nécessite une puissance importante pour son fonctionnement.

A cet effet, l'invention a pour objet un module de coupe de végétaux couplable à un châssis de machine de travail du sol, ledit module de coupe comprenant un caisson positionnable en appui au sol, au moins un disque de coupe rotatif à axe de rotation dit vertical logé à l'intérieur du caisson et un dispositif d'entraînement en rotation du au moins un disque équipant ledit caisson, ledit caisson présentant en configuration d'utilisation d'appui au sol, une face avant ouverte, une face arrière opposée, des faces latérales, une face du dessous en regard du sol à travailler et une face du dessus opposée, et l'axe de rotation dit vertical du au moins un disque passant par les faces du dessous et du dessus du caisson, caractérisé en ce que le nombre des disques de coupe est au moins égal à 4, en ce que les disques de coupe montés solidaires en rotation forment au moins deux ensembles de disques disposés, vus depuis la face avant du caisson, côte à côté à l'intérieur du caisson, en configuration d'utilisation du caisson avec chaque ensemble de disques comprenant au moins deux disques coaxiaux parallèles superposés, en ce que les disques de l'un des ensembles et les disques de l'autre ou d'un autre ensemble sont des disques contrarotatifs avec chaque disque d'un ensemble coplanaire avec un disque de l'autre ensemble, en ce que chaque disque porte au moins un couteau dit radial monté libre à rotation autour d'un axe parallèle à l'axe de rotation du disque qui le porte pour un déplacement dudit couteau entre une position déployée dans laquelle il s'étend au moins partiellement en saillie radiale du disque et une position escamotée, en ce que les couteaux sont décalés angulairement d'un disque à un autre d'un même ensemble de disques et d'un disque d'un ensemble de disques à un disque coplanaire d'un autre ensemble de disques.

Le module de coupe, objet de l'invention, est plus particulièrement destiné à la coupe de végétaux s'étendant entre les rangs de culture et dits inter-rang.

L'organisation des disques sous forme d'au moins deux ensembles de disques montés solidaires en rotation avec chaque ensemble comprenant au moins deux disques permet de fragmenter les végétaux avec une puissance nécessaire réduite sans nuire à la simplicité de la construction du fait d'un montage solidaire en rotation des disques. La réalisation des disques sous forme de disques à couteaux décalés angulairement d'un disque à un autre avec un escamotage possible des couteaux lors de la rencontre avec un obstacle et un déploiement des couteaux s'opérant sous la simple action de la force centrifuge résultant de la rotation des disques permet l'obtention d'un module dont le fonctionnement est sûr et la maintenance aisée.

Selon un mode de réalisation de l'invention, les couteaux qui sont décalés angulairement d'un disque d'un ensemble de disques à un disque coplanaire d'un autre ensemble de disques sont décalés angulairement d'un angle sensiblement égal à 90° à plus ou moins 30° près. De préférence, les couteaux sont au nombre de deux par disque.

Selon un mode de réalisation de l'invention, chaque disque est un disque circulaire, ovoïde ou triangulaire de préférence lisse.

Selon un mode de réalisation de l'invention, au moins l'un, de préférence chaque couteau, est formé d'une lame rectangulaire dont au moins deux bords sont tranchants. Il en résulte, du fait de la variation possible de position du couteau, une efficacité accrue du couteau.

Selon un mode de réalisation de l'invention, le dispositif d'entraînement en rotation des disques équipant ledit caisson comprend au moins un moteur, de préférence hydraulique, s'étendant en saillie de la face du dessus du caisson et un système mécanique de transmission du mouvement de rotation du moteur aux disques. Ce système mécanique de transmission peut être un système mécanique à engrenage, à chaîne, à courroie ou autre.

Selon un mode de réalisation de l'invention, la face avant du caisson est en configuration d'utilisation du caisson surmontée d'un déflecteur. Ce déflecteur permet de rabattre les végétaux pour faciliter l'alimentation de la face avant en végétaux.

Selon un mode de réalisation de l'invention, la face du dessous et/ou les faces latérales du caisson sont équipées d'au moins un organe d'appui au sol, tel qu'un patin d'appui au sol du caisson. Ces patins peuvent être réalisés sous forme de pièce d'usure pour augmenter la durée de vie d'un tel module de coupe.

L'invention a encore pour objet une machine de travail du sol pour culture en rangs comprenant au moins un châssis et au moins un module de coupe de végétaux couplable au châssis, caractérisée en ce que le ou au moins l'un, de préférence chacun des modules de coupe est conforme à ceux décrits ci-dessus.

Selon un mode de réalisation de l'invention, le châssis comprend au moins une poutre destinée à s'étendre transversalement aux rangs de culture, le nombre de modules de coupe est au moins égal à deux, et les modules de coupe sont couplables de manière décalée axialement le long de la poutre. Le châssis comprend au moins une poutre dite transversale s'étendant transversalement à la direction de déplacement du châssis. Les modules de coupe peuvent être disposés l'un, à l'une des extrémités, l'autre, à l'autre des extrémités de la poutre pour s'étendre de part et d'autre d'un rang de culture avec la poutre enjambant ledit rang.

Selon un mode de réalisation de l'invention, la poutre est une poutre réglable en longueur. Ainsi, la machine peut s'adapter à tout type de culture en rang.

Selon un mode de réalisation de l'invention, chaque module de coupe est, à l'état couplé au châssis relié au châssis par un dispositif de liaison non rigide pour permettre au caisson du module de coupe de suivre le profil du sol. La présence d'un dispositif de liaison non rigide, c'est-à-dire autorisant une liberté de mouvement du caisson, permet d'éviter un endommagement du caisson lors de la rencontre du caisson avec un obstacle au cours de l'avancement du caisson le long d'un rang de culture.

Selon un mode de réalisation de l'invention, le dispositif de liaison comprend une pluralité de liens souples, tels que des chaînes, chaque lien souple s'étend entre une face latérale ou la face du dessus du caisson et le châssis, et les liens disposés les plus proches de la face avant sont de longueur inférieure aux liens disposés les plus proches de la face arrière du caisson. Ainsi, la face du dessous du module de coupe est inclinée à pente descendante depuis la face avant vers la face arrière, ce qui facilite son avancement.

### Brève description des dessins

L'invention sera bien comprise à la lecture de la description suivante d'exemples de réalisation, en référence aux dessins annexés dans lesquels :
[Fig. 1] représente une vue en perspective d'une machine de travail du sol équipés de deux modules de coupe en configuration d'utilisation d'appui au sol desdits modules de coupe ;
[Fig. 2] représente une vue de face de la machine de travail du sol de la figure 1 ;
[Fig. 3] représente une vue arrière de la machine de travail du sol de la figure 1 ;
[Fig. 4] représente une vue de côté de la machine de travail du sol de la figure 1 ;
[Fig. 5] représente une vue schématique partielle en perspective d'un module de coupe conforme à l'invention ;
[Fig. 6] représente une autre vue schématique partielle en perspective d'un module de coupe conforme à l'invention ;

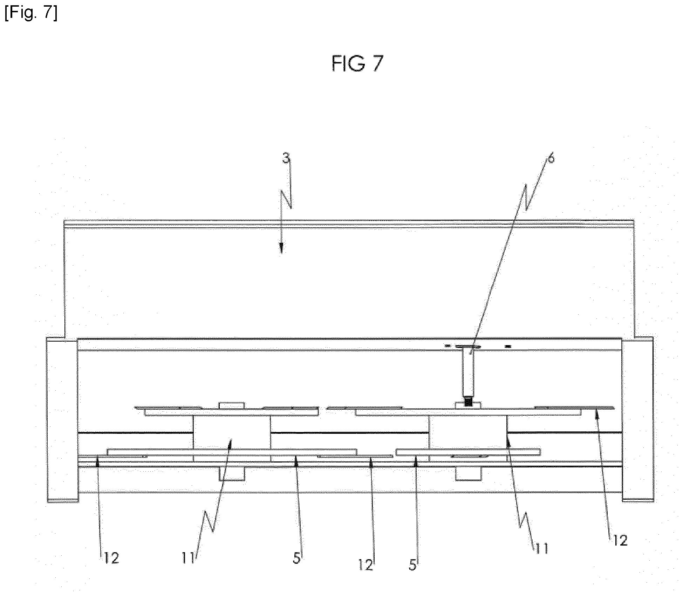

[Fig. 7] représente une vue schématique de partielle de face d'un module de coupe conforme à l'invention ;
[Fig. 8] représente une vue schématique de dessus des disques à couteaux équipant un module de coupe pour illustrer la position des couteaux ;
[Fig. 9] représente une vue schématique partielle d'un module de coupe pour illustrer le système mécanique du dispositif d'entraînement en rotation des disques ;

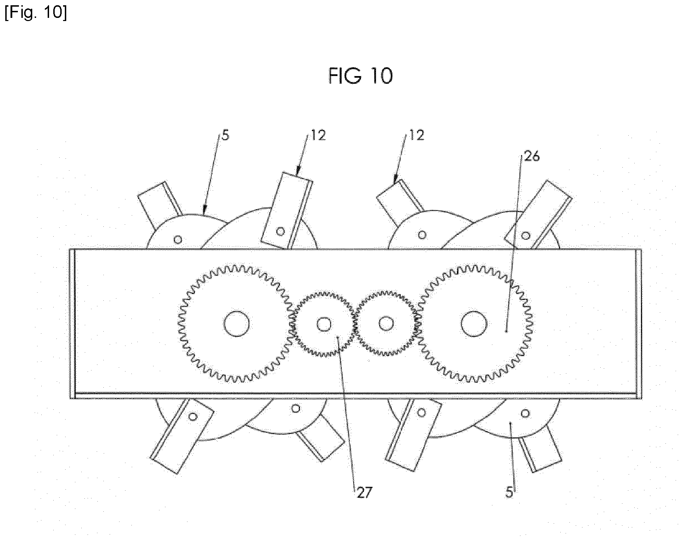

[Fig. 10] représente une vue schématique partielle de dessus d'un module de coupe.

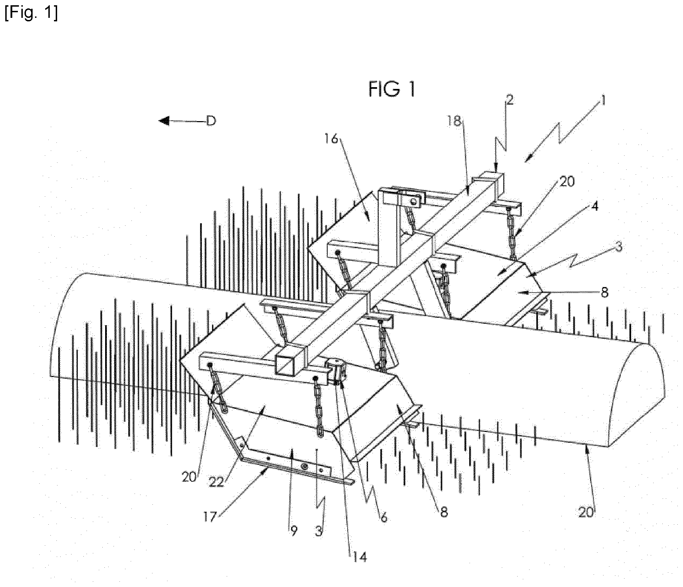

Comme mentionné ci-dessus, l'invention concerne un module 3 de coupe qui peut être couplable à un châssis 2 d'une machine 1 de travail du sol pour permettre l'obtention d'une machine 1 de travail du sol, du type de celle représentée à la figure 1 où ici deux modules 3 de coupe ont été couplés au châssis 2 de la machine 1 de travail du sol. Cette machine 1 de travail du sol est destinée à des cultures en rang, comme illustré à la figure 1 où le rang est ici formé par une serre tunnel.

La machine 1 de travail du sol a pour fonction de permettre à chaque module 3 de coupe équipant la machine 1 de travail du sol de traiter plus particulièrement une zone inter-rang, c'est à dire une zone entre deux rangs de culture, pour éliminer par fragmentation les végétaux ayant pu se développer de manière souhaitée ou non souhaitée dans cette zone. La machine 1 de travail du sol se déplace donc le long d'un rang culture.

Le châssis 2 de la machine est un châssis mobile. Le châssis 2 de la machine 1 de travail du sol peut être indifféremment un châssis tracté, semi-tracté, porté ou automoteur, sans sortir du cadre de l'invention.

Dans l'exemple représenté, le châssis 2 est un châssis tracté par un véhicule tracteur, tel qu'un véhicule enjambeur, non représenté, ce véhicule enjambeur circulant en suivant la ligne formée par le rang de culture.

Le châssis 2 se déplace donc suivant une direction d'avancement parallèle à l'axe longitudinal d'un rang de culture. Le châssis 2 peut prendre un grand nombre de formes. Dans sa version la plus simple, telle que représentée, le châssis 2 comprend une poutre 18 destinée à s'étendre transversalement au rang 21 de culture, c'est-à-dire transversalement à la direction D d'avancement du châssis 2, comme illustré à la figure 1, et les modules 3 de coupe sont couplables de manière décalée axialement, le long de la poutre 18.

En particulier, un module 3 de coupe est disposé à une extrémité de la poutre 18 et l'autre module 3 de coupe à l'autre extrémité de la poutre 18. Ainsi, la poutre 18 s'étend au-dessus du rang 21 de culture et l'un des modules 3 de coupe s'étend d'un côté du rang 21 de culture et l'autre des modules 3 de coupe s'étend de l'autre côté du rang 21 de culture, de sorte qu'en un seul déplacement du châssis 2 le long d'un rang de culture, les deux côtés longitudinaux du rang de culture sont traités.

Idéalement, la poutre 18 est une poutre réglable en longueur. La poutre peut ainsi être une poutre télescopique formée de tronçons de poutre montés à emboîtement coulissant. La longueur de la poutre 18 est réglée en fonction de la largeur du rang de culture à parcourir.

Chaque module 3 de coupe couplable à un tel châssis 2 comprend un caisson 4, des disques 5 de coupe rotatifs à axe de rotation dit vertical logés à l'intérieur du caisson 4, et un dispositif 6 d'entraînement en rotation des disques 5 équipant ledit caisson 4.

Le caisson 4 présente, au moins une configuration d'utilisation dans laquelle il est au moins partiellement en appui au sol. Ainsi, en configuration d'utilisation d'appui au sol, le caisson présente une face avant 7 ouverte, une face arrière 8 opposée, des faces latérales 9 et une face du dessous 10 tournée vers le sol à travailler et une face du dessus 22 opposée tournée vers le ciel, comme illlustré à la figure 1.

Le déplacement de ce module de 3 de coupe des végétaux le long du rang de culture s'effectue avec les faces latérales 9 du caisson 4 s'étendant sensiblement parallèlement à l'axe longitudinal du châssis 2. La face avant 7 ouverte du caisson 4 forme donc la face d'attaque du caisson 4 au cours du déplacement du châssis 2 le long d'un rang de culture.

Les végétaux pénètrent par la face avant 7 dans le caisson 4, sont soumis à l'action des disques 5 de coupe et les découpes retombent au sol au niveau de la face arrière 8 du caisson 4.

Chaque disque 5 est un disque rotatif monté à rotation autour d'un axe de rotation dit vertical, c'est-à-dire passant par les faces du dessous 10 et du dessus 22 du caisson 4.

Un module 3 de coupe comprend au moins quatre disques montés solidaires en rotation. Ces disques 5 sont entraînés en rotation à une même vitesse. Les disques 5 de coupe tournent donc à la même vitesse.

Ces disques 5 de coupe montés solidaires en rotation forment au moins deux ensembles 11 de disques disposés, vus depuis la face avant 7 du caisson 4, côte à côte à l'intérieur du caisson 4 en configuration d'utilisation du caisson 4 avec chaque ensemble 11 de disques comprenant au moins deux disques 5 coaxiaux parallèles superposés.

Ainsi, chaque ensemble 11 de disques forme une ligne de coupe au cours de l'avancement du châssis 2 de la machine 1 de travail du sol le long d'un rang de culture.

Bien évidemment, le nombre d'ensembles 11 de disques qui est au moins égal à deux peut être quelconque. Dans l'exemple qui suit, le nombre d'ensembles 11 de disques est égal à deux pour simplifier la description. De même, le nombre de disques 5 pour un ensemble 11 de disques est au moins égal à deux, mais peut être quelconque. A nouveau, seuls deux disques ont été représentés par ensemble 11 avec un disque supérieur et un disque inférieur pour simplifier la description.

Les disques 5 de l'un des ensembles 11 de disques et les disques 5 de l'autre ensemble 11 de disques sont des disques contrarotatifs, c'est-à-dire tournant suivant des sens de rotation opposés. Ces disques forment ainsi entre eux une zone qui permet d'entraîner les végétaux depuis la face avant vers la face arrière du caisson 4.

Chaque disque 5 d'un ensemble 11 est coplanaire avec un disque 5 de l'autre ensemble 11. Ainsi, le disque 5 dit supérieur de l'un des ensembles de disques est coplanaire avec le disque 5 dit supérieur de l'autre ensemble de disques.

De même, le disque 5 inférieur de l'un des ensembles de disques est coplanaire avec le disque 5 dit inférieur de l'autre des ensembles de disques.

Dans l'exemple représenté, chaque disque 5 est un disque ovoïde lisse. En variante, le disque aurait également pu être crénelé sans sortir du cadre de l'invention. De même, le disque aurait pu être de forme circulaire ou triangulaire ou autre sans sortir du cadre de l'invention.

Chaque disque 5 est équipé d'au moins un couteau 12 dit radial monté libre à rotation autour d'un axe parallèle à l'axe de rotation du disque 5 qui le porte pour un déplacement dudit couteau 12 entre une position déployée, dans laquelle il s'étend au moins partiellement en saillie radiale du disque 5 et une position escamotée.

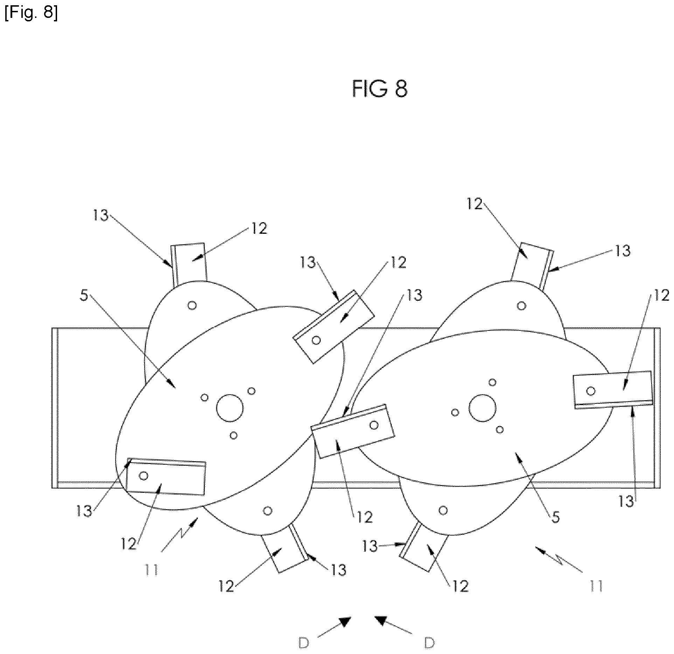

Chaque couteau 12 équipant un disque 5, du fait de son couplage de manière libre en rotation au disque, peut passer sous l'effet de la force centrifuge résultant de l'entraînement en rotation du disque qui le porte, d'une position escamotée à une position déployée dans laquelle il s'étend au moins partiellement en saillie radiale du bord circonférentiel du disque. Dès que ce couteau rencontre un obstacle au cours de l'avancement du module 3 de coupe, il peut tourner autour de son axe de rotation pour s'effacer au moins partiellement à l'intérieur du périmètre délimité par le bord circonférentiel du disque, comme illustré à la figure 8, par l'un des couteaux de l'un des ensembles de disques.

Chaque couteau présente ici, pour son couplage au disque 5, un perçage traversé par un axe de liaison du couteau au disque. Chaque couteau 12 se présente sous forme d'une lame pouvant tourner librement autour de cet axe de liaison.

Dans les exemples représentés, les couteaux sont au nombre de deux par disque. Chaque couteau 12 est ici formé d'une lame rectangulaire dont au moins deux bords 13 sont tranchants. Les bords 13 tranchants sont ici formés par un bord longitudinal de la lame et un bord transversal de la lame. Ce bord transversal tranchant de la lame est celui opposé au bord transversal de la lame par lequel la lame est couplée à rotation au disque grâce à l'axe de liaison décrit ci-dessus, et disposé à proximité dudit bord transversal. Le bord 13 longitudinal tranchant de la lame est, quant à lui, le bord frontal ou avant de la lame, à l'état entraîné en rotation du disque portant la lame et en position déployée du couteau.

Les couteaux 12 sont positionnés les uns par rapport aux autres de manière à éviter toute collision entre deux couteaux, tout en garantissant un effet de fragmentation des végétaux par les couteaux 12.

Ainsi, les couteaux 12 sont décalés angulairement d'un disque à un autre d'un même ensemble 11 de disques 5 et d'un disque 5 d'un ensemble 11 de disques 5 à un disque 5 coplanaire d'un autre ensemble 11 de disques 5.

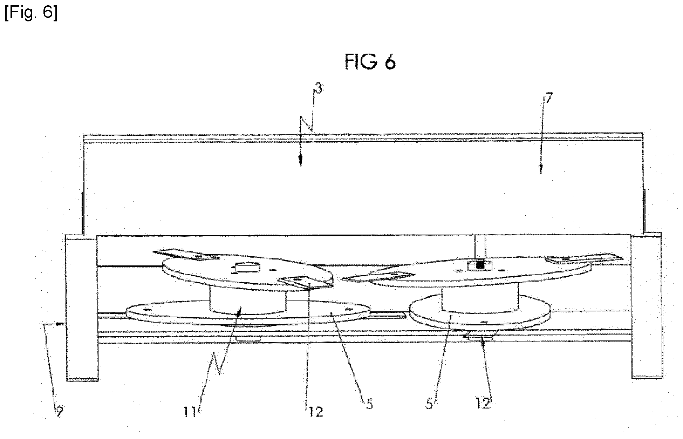

Dans l'exemple représenté à la figure 8 ou à la figure 6, les couteaux 12 d'un même disque 5 sont disposés en opposition sur le disque, c'est-à-dire décalés angulairement de 180°, et sont décalés angulairement de 90° par rapport aux couteaux de l'autre disque 5 du même ensemble 11, comme cela est visible à la figure 8. Les couteaux 12 sont encore décalés angulairement d'un disque d'un ensemble de disques à un disque 5 coplanaire d'un autre ensemble 11 de disques.

Dans l'exemple représenté à la figure 8, les couteaux 12 qui sont décalés angulairement d'un disque 5 d'un ensemble 11 de disques 5 à un disque 5 coplanaire de l'autre ensemble 11 de disques sont décalés angulairement d'un angle sensiblement égal à 90° à plus ou moins 30° de près. Comme ces disques sont montés solidaires en rotation et tournent à la même vitesse, le décalage angulaire est parfaitement maîtrisé. Ainsi, un couteau 12 d'un disque 5 vient s'insérer dans l'intervalle défini par deux couteaux 12 de l'autre disque au cours de la rotation des disques 5.

Pour permettre un entraînement en rotation des disques des ensembles 11 de disques de manière solidaire en rotation, et à la même vitesse, le dispositif 6 d'entraînement à rotation des disques 5 équipant le caisson 4 comprend un moteur 14 qui est ici un moteur hydraulique. Ce moteur 14 s'étend en saillie de la face du dessus 22 du caisson 4.

Le dispositif 6 d'entraînement en rotation des disques 5 comprend encore un système mécanique 15 de transmission du mouvement de rotation du moteur 14 aux disques 5.

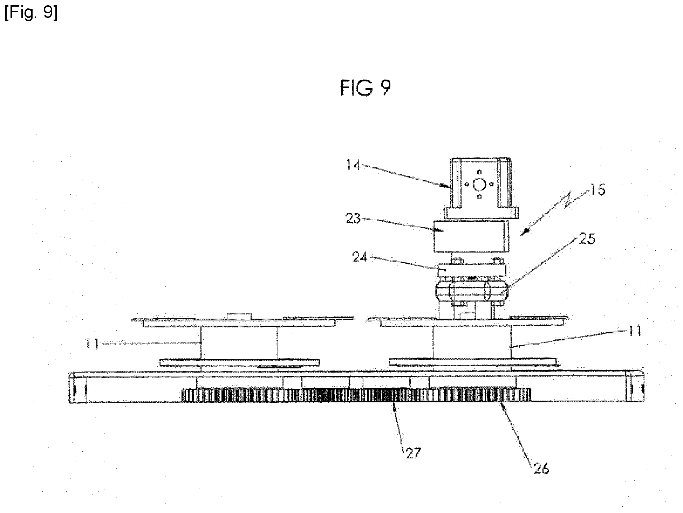

Ce moteur 14 peut être raccordé à l'hydraulique du véhicule tracteur du châssis. Le système mécanique 15 de transmission peut être un système de transmission à engrenage, comme illustré à la figure 9 ou à chaîne ou à courroie ou autre.

Ainsi, l'arbre moteur du moteur 14 hydraulique vient par exemple en prise via un accouplement élastique avec un arbre sur lequel les disques 5 d'un ensemble 11 sont montés de manière solidaire en rotation avec l'arbre.

Cet arbre rotatif porte, à son extrémité opposée à celle en prise avec l'arbre moteur, un pignon solidaire en rotation de l'arbre. Ce pignon vient en prise par engrènement avec un pignon porté par l'arbre porte-disques de l'autre ensemble de disques. Ainsi, la rotation de l'un des arbres implique, via les pignons, la rotation de l'autre arbre.

Dans l'exemple représenté à la figure 9, l'accouplement élastique entre l'arbre moteur du moteur 14 hydraulique et l'arbre porte-disques d'un ensemble 11 est représenté par les références 23, 24, 25. Le pignon porté par cet arbre est représenté en 26. Ce pignon 26 s'engrène via un pignon intermédiaire 27 avec un pignon monté solidaire en rotation de l'arbre porte-disques d'un deuxième ensemble 11 de disques du module de coupe.

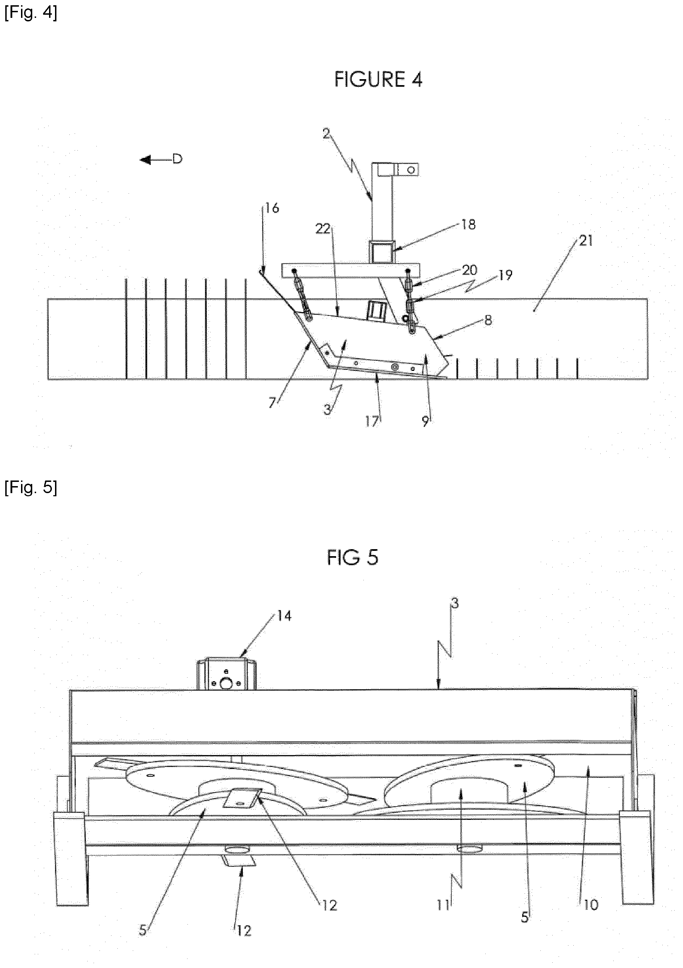

Pour accroître l'efficacité du caisson 4, la face avant 7 du caisson 4 est, en configuration d'utilisation du caisson 4, dans laquelle le caisson est au moins partiellement en appui au sol, surmontée d'un déflecteur 16. Ce déflecteur 16 se présente sous forme d'une plaque inclinée s'étendant dans le prolongement du bord supérieur de la face avant 7 du caisson 3 en configuration d'utilisation d'appui au sol du caisson 3 comme représenté aux figures 1 et 4, par exemple.

Cette plaque constitutive du déflecteur 16 est inclinée vers l'avant depuis son point bas de liaison au bord supérieur de la face avant 7 du caisson en direction de son point haut disposé en avant de la face avant du caisson 3 à pente descendante depuis le point haut en direction du point bas.

Ce déflecteur 16 tend à rabattre les végétaux en direction de l'Intérieur du caisson 3.

Pour parfaire le module 3 de coupe, la face du dessous 10 et/ou les faces latérales 9 du caisson 4 sont équipées d'au moins un organe 17 d'appui au sol, tel qu'un patin d'appui au sol, du caisson 4.

Dans l'exemple représenté aux figures, les faces latérales 9 du caisson 4 sont munies, au niveau de leur bord dit inférieur en configuration d'utilisation d'appui au sol du caisson 3, d'un fer plat venant renforcer ce bord inférieur. Ce fer plat constitue, à la manière d'un ski, un patin qui permet au caisson 4 de mieux glisser sur le sol au cours de son déplacement et de pouvoir franchir des obstacles sans endommagement.

Ce fer plat est une pièce d'usure montée amovible sur le bord inférieur de ladite face latérale 9. Ce fer plat peut être réglable en position sur le bord inférieur de la face latérale 9. Ce fer plat se prolonge pour venir également protéger l'un des bords dits latéraux de la face avant 7 du caisson 4. En complément ou en variante, la face du dessous 10 du caisson 4 peut également être munie de tels éléments de renfort formant ou non des patins, selon que la face du dessous est disposée au même niveau que le bord inférieur des faces latérales du caisson ou à un niveau supérieur au bord inférieur de ces faces latérales, comme dans l'exemple représenté.

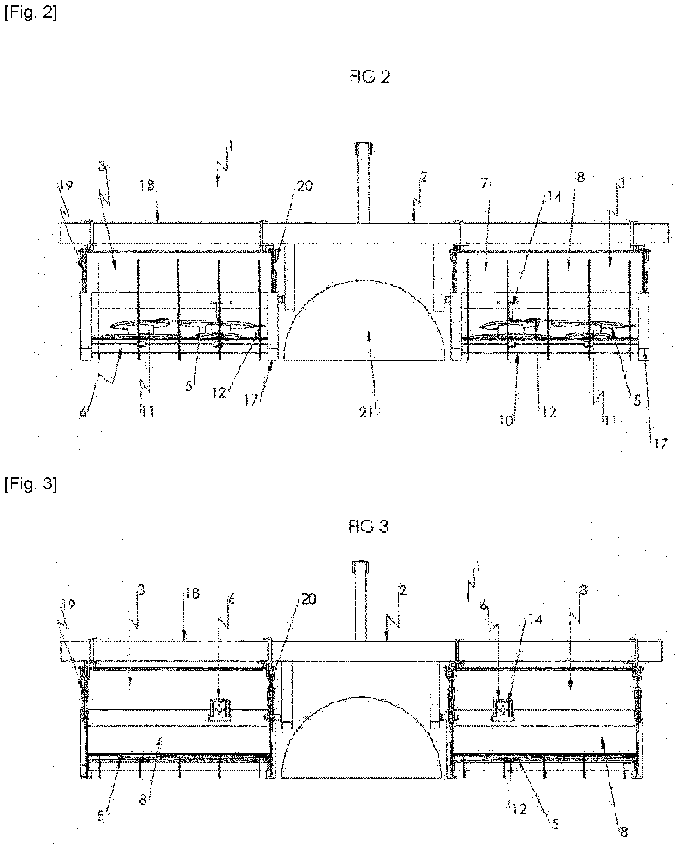

Pour assurer un appui au sol au moins partiel du caisson 4, en configuration d'utilisation, tout en permettant au caisson 4 de suivre le profil du sol, le module 3 de coupe est, à l'état couplé au châssis 2, relié au châssis 2 par un dispositif de liaison 19 non rigide comme illustré par exemple aux figures 1 à 4.

Ce dispositif de liaison 19 comprend une pluralité de liens 20 souples, et chaque lien souple s'étend entre une face latérale 9 ou la face du dessus 22 du caisson 4, et le châssis 2.

Ces liens 20 souples sont ici réalisés sous forme de chaîne. Ces liens souples sont au nombre de quatre avec deux liens reliant la partie avant des faces latérales du caisson 4 au châssis 2, et deux liens reliant la partie arrière des faces latérales du caisson 4 au châssis 2.

Les liens 20 disposés les plus proches de la face avant du caisson sont de longueur inférieure aux liens 20 disposés les plus proches de la face arrière 8 du caisson 4. Ainsi, la face avant du caisson 4 est écartée du sol et le caisson 4 est incliné avec sa face du dessous à pente descendante depuis l'avant vers l'arrière du caisson 4 comme illustré à la figure 4.

Cette configuration, qui correspond à une configuration d'utilisation d'appui au sol du caisson 4, facilite l'avancement du module de coupe.

En pratique, le fonctionnement d'une machine de travail du sol intégrant un ou plusieurs modules 3 de coupe, tels que décrit ci-dessus, est tel que suit.

La machine 1 de travail du sol est positionnée dans une surface cultivée où les cultures s'opèrent en rang, avec le ou chaque module de coupe positionné le long d'un rang de culture, comme illustré à la figure 1.

La machine de travail du sol est entraînée en déplacement suivant une ligne parallèle au rang de culture pour se déplacer le long dudit rang.

Les disques des ensembles de coupe tournent tous à une même vitesse.

Au cours de l'avancement de la machine au travail du sol, les tiges des végétaux sont découpées par les couteaux 12 à différentes hauteurs pour former des fragments de végétaux qui chutent au sol.

Lorsque le caisson rencontre un obstacle au cours de son avancement, il peut, grâce à ses chaînes de liaison déformables le reliant au châssis, se soulever pour franchir l'obstacle.

Lorsque c'est le couteau d'un disque qui rencontre un obstacle, par exemple une tige d'un végétal trop grosse, c'est le couteau qui s'escamote par contact d'appui avec l'obstacle au cours de l'avancement du caisson 4 avant de revenir en position déployée une fois l'obstacle franchi.

Le fonctionnement d'une telle machine de travail du sol est fiable et efficace.

## Revendications

1. Module (3) de coupe de végétaux couplable à un châssis (2) de machine (1) de travail du sol, ledit module (3) de coupe comprenant un caisson (4) positionnable en appui au sol, au moins un disque (5) de coupe rotatif à axe de rotation dit vertical logé à l'intérieur du caisson (4) et un dispositif (6) d'entraînement en rotation du au moins un disque (5) équipant ledit caisson (4), ledit caisson (4) présentant en configuration d'utilisation d'appui au sol, une face avant (7) ouverte, une face arrière (8) opposée, des faces latérales (9), une face du dessous (10) en regard du sol à travailler et une face du dessus (22) opposée, et l'axe de rotation dit vertical du au moins un disque (5) passant par les faces du dessous (10) et du dessus (22) du caisson (4), **caractérisé en ce que** le nombre des disques (5) de coupe est au moins égal à 4, **en ce que** les disques (5) de coupe montés solidaires en rotation forment au moins deux ensembles (11) de disques disposés, vus depuis la face avant (7) du caisson, côte à côté à l'intérieur du caisson (4), en configuration d'utilisation du caisson (4) avec chaque ensemble (11) de disques comprenant au moins deux disques (5) coaxiaux parallèles superposés, **en ce que** les disques (5) de l'un des ensembles (11) et les disques (5) de l'autre ou d'un autre ensemble (11) sont des disques (5) contrarotatifs avec chaque disque (5) d'un ensemble (11) coplanaire avec un disque (5) de l'autre ensemble (11), **en ce que** chaque disque (5) porte au moins un couteau (12) dit radial monté libre à rotation autour d'un axe parallèle à l'axe de rotation du disque (5) qui le porte pour un déplacement dudit couteau (12) entre une position déployée dans laquelle il s'étend au moins partiellement en saillie radiale du disque (5) et une position escamotée, **en ce que** les couteaux (12) sont décalés angulairement d'un disque (5) à un autre d'un même ensemble (11) de disques (5) et d'un disque (5) d'un ensemble (11) de disques (5) à un disque (5) coplanaire d'un autre ensemble (11) de disques (5).

2. Module (3) de coupe de végétaux selon la revendication 1, **caractérisé en ce que** les couteaux (12) qui sont décalés angulairement d'un disque (5) d'un ensemble (11) de disques (5) à un disque (5) coplanaire d'un autre ensemble (11) de disques (5) sont décalés angulairement d'un angle sensiblement égal à 90° à plus ou moins 30° près.

3. Module (3) de coupe de végétaux selon l'une des revendications 1 ou 2, **caractérisé en ce que** chaque disque (5) est un disque circulaire, ovoïde ou triangulaire de préférence lisse.

4. Module (3) de coupe de végétaux selon l'une des revendications 1 à 3, **caractérisé en ce qu'**au moins l'un, de préférence chaque couteau (12), est formé d'une lame rectangulaire dont au moins deux bords (13) sont tranchants.

5. Module (3) de coupe de végétaux selon l'une des revendications 1 à 4, **caractérisé en ce que** le dispositif (6) d'entraînement en rotation des disques (5) équipant ledit caisson (4) comprend au moins un moteur (14), de préférence hydraulique, s'étendant en saillie de la face du dessus (22) du caisson (4) et un système mécanique (15) de transmission du mouvement de rotation du moteur (14) aux disques (5).

6. Module (3) de coupe de végétaux selon l'une des revendications 1 à 5, **caractérisé en ce que** la face avant (7) du caisson (4) est en configuration d'utilisation du caisson (4) surmontée d'un déflecteur (16).

7. Module (3) de coupe de végétaux selon l'une des revendications 1 à 6, **caractérisé en ce que** la face du dessous (10) et/ou les faces latérales (9) du caisson (4) sont équipées d'au moins un organe (17) d'appui au sol, tel qu'un patin d'appui au sol du caisson (4).

8. Machine (1) de travail du sol pour culture en rangs (21) comprenant au moins un châssis (2) et au moins un module (3) de coupe de végétaux couplable au châssis, **caractérisée en ce que** le ou au moins l'un, de préférence chacun des modules (3) de coupe est conforme à l'une des revendications 1 à 7.

9. Machine (1) de travail du sol selon la revendication 8, **caractérisée en ce que** le châssis (2) comprend au moins une poutre (18) destinée à s'étendre transversalement aux rangs (21) de culture, **en ce que** le nombre de modules (3) de coupe est au moins égal à deux, et **en ce que** les modules (3) de coupe sont couplables de manière décalée axialement le long de la poutre (18).

10. Machine (1) de travail du sol selon la revendication 9, **caractérisée en ce que** la poutre (18) est une poutre réglable en longueur.

11. Machine (1) de travail du sol selon l'une des revendications 8 à 10, **caractérisée en ce que** chaque module (3) de coupe est, à l'état couplé au châssis (2) relié au châssis (2) par un dispositif de liaison (19) non rigide pour permettre au caisson (4) du module (3) de coupe de suivre le profil du sol.

12. Machine (1) de travail du sol selon la revendication 11, **caractérisée en ce que** le dispositif de liaison (19) comprend une pluralité de liens (20) souples, tels que des chaînes, **en ce que** chaque lien (20) souple s'étend entre une face latérale (9) ou la face du dessus (22) du caisson (4) et le châssis (2) et **en ce que** les liens (20) disposés les plus proches de la face avant (7) sont de longueur inférieure aux liens (20) disposés les plus proches de la face arrière (8) du caisson (4).

## Patentansprüche

1. Pflanzenschneidemodul (3), das mit einem Rahmen (2) einer Bodenbearbeitungsmaschine (1) koppelbar ist, das Schneidmodul (3) umfassend einen Kasten (4), der auf dem Boden aufliegend positionierbar ist, mindestens eine drehende Schneidscheibe (5) mit sogenannter vertikaler Drehachse, die im Inneren des Kastens (4) untergebracht ist, und eine Vorrichtung (6) zum Drehantrieb der mindestens einen Scheibe (5), mit der der Kasten (4) ausgestattet ist, wobei der Kasten (4) in Gebrauchskonfiguration der Bodenstütze eine offene Vorderseite (7), eine gegenüberliegende Rückseite (8), Seitenflächen (9), eine Unterseite (10), die dem zu bearbeitenden Boden zugewandt ist, und eine gegenüberliegende Oberseite (22) aufweist, und wobei die sogenannte vertikale Drehachse der mindestens einen Scheibe (5) durch die Unterseite (10) und die Oberseite (22) des Kastens (4) verläuft, **dadurch gekennzeichnet, dass** die Anzahl der Schneidscheiben (5) mindestens gleich 4 ist, dass die drehfest montierten Schneidscheiben (5) mindestens zwei Scheibenanordnungen (11) bilden, die, von der Vorderseite (7) des Kastens aus gesehen in Gebrauchskonfiguration des Kastens (4), Seite an Seite im Inneren des Kastens (4) angeordnet sind, wobei jede Scheibenanordnung (11) mindestens zwei koaxiale, parallele, übereinander liegende Scheiben (5) umfasst, dass die Scheiben (5) einer der Anordnungen (11) und die Scheiben (5) der anderen oder einer weiteren Anordnung (11) gegenläufige Scheiben (5) sind, wobei jede Scheibe (5) einer Anordnung (11) koplanar mit einer Scheibe (5) der jeweils anderen Anordnung (11) ist, dass jede Scheibe (5) mindestens ein sogenanntes radiales Messer (12) trägt, das frei drehbar um eine Achse parallel zu der Drehachse der Scheibe (5) montiert ist, die es für eine Verschiebung des Messers (12) zwischen einer ausgestellten Position, in der es sich zumindest teilweise radial hervorstehend von der Scheibe (5) erstreckt, und einer eingezogenen Position trägt, dass die Messer (12) von einer Scheibe (5) zu einer anderen einer gleichen Anordnung (11) von Scheiben (5) und von einer Scheibe (5) einer Anordnung (11) von Scheiben (5) zu einer koplanaren Scheibe (5) einer anderen Anordnung (11) von Scheiben (5) winkelmäßig versetzt sind.

2. Pflanzenschneidemodul (3) nach Anspruch 1, **dadurch gekennzeichnet, dass** die Messer (12), die von einer Scheibe (5) einer Anordnung (11) von Scheiben (5) zu einer koplanaren Scheibe (5) einer anderen Anordnung (11) von Scheiben (5) winkelmäßig um einen Winkel im Wesentlichen gleich wie 90° bis mehr oder weniger 30° versetzt sind.

3. Pflanzenschneidemodul (3) nach einem der Ansprüche 1 oder 2, **dadurch gekennzeichnet, dass** jede Scheibe (5) eine kreisförmige, eiförmige oder dreieckige, vorzugsweise glatte Scheibe ist.

4. Schneidmodul (3) von Pflanzen nach einem der Ansprüche 1 bis 3, **dadurch gekennzeichnet, dass** mindestens ein, vorzugsweise jedes Messer (12), aus einer rechteckigen Klinge gebildet ist, wovon mindestens zwei Kanten (13) scharf sind.

5. Pflanzenschneidemodul (3) nach einem der Ansprüche 1 bis 4, **dadurch gekennzeichnet, dass** die Vorrichtung (6) zum Drehantrieb der Scheiben (5), mit denen der Kasten (4) ausgestattet ist, mindestens einen Motor (14), vorzugsweise hydraulisch, der sich von der Oberseite (22) des Kastens (4) hervorstehend erstreckt, und ein mechanisches System (15) zum Übertragen der Drehbewegung des Motors (14) auf die Scheiben (5) umfasst.

6. Pflanzenschneidemodul (3) nach einem der Ansprüche 1 bis 5, **dadurch gekennzeichnet, dass** die Vorderseite (7) des Kastens (4) in Gebrauchskonfiguration des Kastens (4) von einem Deflektor (16) überbaut ist.

7. Pflanzenschneidemodul (3) nach einem der Ansprüche 1 bis 6, **dadurch gekennzeichnet, dass** die Unterseite (10) und/oder die Seitenflächen (9) des Kastens (4) mit mindestens einem Bodenabstützelement (17), wie beispielsweise einer Bodenabstützkufe des Kastens (4), ausgestattet sind.

8. Bodenbearbeitungsmaschine (1) für Reihenkulturen (21), umfassend mindestens einen Rahmen (2) und mindestens ein mit dem Rahmen koppelbares Pflanzenschneidmodul (3), **dadurch gekennzeichnet, dass** das oder mindestens eines, vorzugsweise jedes der Schneidmodule (3) einem der Ansprüche 1 bis 7 entspricht.

9. Bodenbearbeitungsmaschine (1) nach Anspruch 8, **dadurch gekennzeichnet, dass** der Rahmen (2) mindestens einen Balken (18) umfasst, der dazu bestimmt ist, sich quer zu den Kulturreihen (21) zu erstrecken, dass die Anzahl der Schneidmodule (3) mindestens gleich zwei ist, und dass die Schneidmodule (3) axial versetzt entlang des Balkens (18) koppelbar sind.

10. Bodenbearbeitungsmaschine (1) nach Anspruch 9, **dadurch gekennzeichnet, dass** der Balken (18) ein in der Länge verstellbarer Balken ist.

11. Bodenbearbeitungsmaschine (1) nach einem der Ansprüche 8 bis 10, **dadurch gekennzeichnet, dass** jedes Schneidmodul (3) in dem mit dem Rahmen (2) gekoppelten Zustand durch eine nicht starre Verbindungsvorrichtung (19) mit dem Rahmen (2) verbunden ist, um es dem Kasten (4) des Schneidmoduls (3) zu ermöglichen, dem Bodenprofil zu folgen.

12. Bodenbearbeitungsmaschine (1) nach Anspruch 11, **dadurch gekennzeichnet, dass** die Verbindungsvorrichtung (19) eine Vielzahl von flexiblen Verbindungen (20), wie beispielsweise Ketten, umfasst, dass sich jede flexible Verbindung (20) zwischen einer Seitenfläche (9) oder der Oberseite (22) des Kastens (4) und dem Rahmen (2) erstreckt und dass die Verbindungen (20), die am nächsten zu der Vorderseite (7) angeordnet sind, eine geringere Länge aufweisen als die Verbindungen (20), die am nächsten zu der Rückseite (8) des Kastens (4) angeordnet sind.

## Claims

1. A plant cutting module (3) coupling to a chassis (2) of a soil working machine (1), said cutting module (3) comprising a box (4) which can be positioned resting on the ground, at least one rotary cutting disc (5) with a so-called vertical axis of rotation housed inside the box (4) and a device (6) for driving the rotation of the at least one disc (5) fitted to said box (4), said box (4) having, in the usage configuration resting on the ground, an open front face (7), an opposite rear face (8), side faces (9), a bottom face (10) facing the ground to be worked and an opposite top face (22), and the so-called vertical axis of rotation of the at least one disc (5) passing through the bottom (10) and top (22) faces of the box (4), **characterized in that** the number of cutting discs (5) is at least equal to 4, **in that** the cutting discs (5) mounted secured in rotation form at least two sets (11) of discs arranged, seen from the front face (7) of the box, side by side inside the box (4), in the usage configuration of the box (4) with each set (11) of discs comprising at least two superimposed parallel coaxial discs (5), **in that** the discs (5) of one of the sets (11) and the discs (5) of the other or another set (11) are counter-rotating discs (5) with each disc (5) of a set (11) coplanar with a disc (5) of the other set (11), **in that** each disc (5) carries at least one so-called radial knife (12) mounted free to rotate about an axis parallel to the axis of rotation of the disc (5) which carries it for a movement of said knife (12) between a deployed position in which it extends at least partially radially projecting from the disc (5) and a retracted position, **in that** the knives (12) are angularly offset from one disc (5) to another of the same set (11) of discs (5) and from one disc (5) of a set (11) of discs (5) to a disc (5) coplanar with another set (11) of discs (5).

2. The plant cutting module (3) according to claim 1, **characterized in that** the knives (12) which are angularly offset from a disc (5) of a set (11) of discs (5) to a coplanar disc (5) of another set (11) of discs (5) are angularly offset by an angle substantially equal to 90° to within plus or minus 30°.

3. The plant cutting module (3) according to one of claims 1 or 2, **characterized in that** each disc (5) is a circular, ovoid or triangular disc, preferably smooth.

4. The plant cutting module (3) according to one of claims 1 to 3, **characterized in that** at least one, preferably each knife (12), is formed by a rectangular blade with at least two sharp edges (13).

5. The plant cutting module (3) according to one of claims 1 to 4, **characterized in that** the device (6) for rotating the discs (5) fitted to said box (4) comprises at least one motor (14), preferably hydraulic, extending projecting from the top face (22) of the box (4) and a mechanical system (15) for transmitting the rotational movement of the motor (14) to the discs (5).

6. The plant cutting module (3) according to one of claims 1 to 5, **characterized in that** the front face (7) of the box (4) is in the usage configuration of the box (4) surmounted by a deflector (16).

7. The plant cutting module (3) according to one of claims 1 to 6, **characterized in that** the underside (10) and/or the side faces (9) of the box (4) are equipped with at least one ground support member (17), such as a ground support pad of the box (4).

8. A machine (1) for working the soil for row cultivation (21) comprising at least one chassis (2) and at least one plant cutting module (3) coupled to the chassis, **characterized in that** the or at least one, preferably each of the cutting modules (3) conforms to one of claims 1 to 7.

9. The machine (1) for working the soil according to claim 8, **characterized in that** the chassis (2) comprises at least one beam (18) intended to extend transversely to the cultivation rows (21), **in that** the number of cutting modules (3) is at least equal to two, and **in that** the cutting modules (3) can be coupled in an axially offset manner along the beam (18).

10. The machine (1) for working the soil according to claim 9, **characterized in that** the beam (18) is a beam adjustable in length.

11. The machine (1) for working the soil according to one of claims 8 to 10, **characterized in that** each cutting module (3) is, in the state coupled to the chassis (2), connected to the chassis (2) by a device for non-rigid connection (19) to allow the box (4) of the cutting module (3) to follow the profile of the soil.

12. The machine (1) for working the soil according to claim 11, **characterized in that** the connecting device (19) comprises a plurality of flexible links (20), such as chains, **in that** each flexible link (20) extends between a side face (9) or the top face (22) of the box (4) and the chassis (2) and **in that** the links (20) arranged closest to the front face (7) are of length smaller than the links (20) arranged closest to the rear face (8) of the box (4).
